# EUROPEAN PATENT SPECIFICATION

(11) **EP 1 439 691 B1**
(45) Date of publication and mention of the grant of the patent: **20.05.2009**
(21) Application number: 04000526.6
(22) Date of filing: 13.01.2004
(51) Int. Cl.: H04N 1/60

(54) **Rendering intent selection based on input color space and object type**
Auswahl des Wiedergabemodus basierend auf Eingabefarbraum und Objekttype
Sélection d'une intention de rendu basé sur l'espace-entrée de couleurs et le type d'objet

(30) Priority: 15.01.2003 US 342866
(43) Date of publication of application: 21.07.2004
(73) Proprietor: Xerox Corporation, Rochester, New York 14644 (US)
(72) Inventor: Krueger, Sharon A., Webster NY 14580 (US); Van de Capelle, Jean-Pierre R.N., Rochester NY 14610 (US)
(74) Representative: Grünecker, Kinkeldey, Stockmair & Schwanhäusser Anwaltssozietät

(56) References cited:
- EP-A- 0 619 555
- EP-A- 1 014 687
- EP-A- 1 152 373
- WO-A-95/31794
- US-A- 5 872 895

## Description

The invention relates to rendering intent selection for document image processing. It finds particular application in conjunction with rendering intent selection based on input color space and will be described with particular reference thereto. However, it is to be appreciated that the invention is also amenable to other applications.

As users of color products become more and more skilled, requirements for control over the image path in a digital front end (DFE) of a image processing system become more pronounced. One example of this is rendering intent selection during image processing of a document image to be rendered. For example, DocuSP 3.0, the Xerox Common Controller/DFE, currently selects rendering intent for document images based on object type.

Rendering intents are simply methods (i.e., sets of rules) for converting colors from one color space to another. They are a standard part of the ICC (International Color Consortium) profile format commonly used in existing color-management systems.

The ICC profile specification defines various rendering intents, including: 1) absolute colorimetric rendering, 2) relative colorimetric rendering, 3) perceptual rendering, and 4) saturation rendering. The rendering intent being used during image processing of a document image defines how colors are mapped from the input color space to the output color space.

Typically, graphics data is processed through the saturation rendering intent to produce vivid output, while images are processed through the perceptual rendering intent to produce true to life pictorials. Such system-specified defaults are available in image processing systems so that users do not need to specify the rendering intent for the document image or for each object type.

Where current mechanisms in color image processing select default rendering intents based on object type, an RGB graphic and a CMYK graphic are rendered through the same rendering intent. This may not always be desirable from the customer perspective.

Therefore, and as now not existing, to produce optimal image quality, it would be desirable to add a capability in the image processing system to select rendering intent based not only on object type, but also on input color space.. For example, image data may be processed so that CMYK graphic data is rendered through a colorimetric rendering intent to preserve the accuracy of colors, while RGB graphic data on the same page is rendered through a perceptual intent to produce a more pleasing output.
US 5,872,895 discloses a method for matching colors when printing a color document, specifically to a method for object-based color matching when printing documents. The document mentions color management exemplarily, with color input, display and output devices for computer systems, for example a color monitor which works in the RGB color space or printers which work in the CMYK color space. Further, color management systems are described which match colors pursuant to a rendering intent which affects the way colors are matched by causing colors to be matched with a particular use in mind. For example, for business purposes it is desirable to use saturated colors, providing a typically vivid appearance, or a photograph is printed with colors which are matched perceptually. Finally, color matching is performed under consideration of the object to be printed, including text, region or pixel maps. Hence, depending on the object type, a color matching session with a particular rendering intent is used to perform color matching on these types of objects.

Thus, there is a particular need for selection of rendering intent based on input color space. The invention contemplates a method for section of rendering intent based on input color space that overcomes at least one of the above-mentioned problems and others.

The invention provides a method according to the subject matter of claim 1. Advantageous and preferred embodiments are defined by the dependent claims.

Benefits and advantages of the invention will become apparent to those of ordinary skill in the art upon reading and understanding the description of the invention provided herein.

The invention is described in more detail in conjunction with the accompanying drawing.

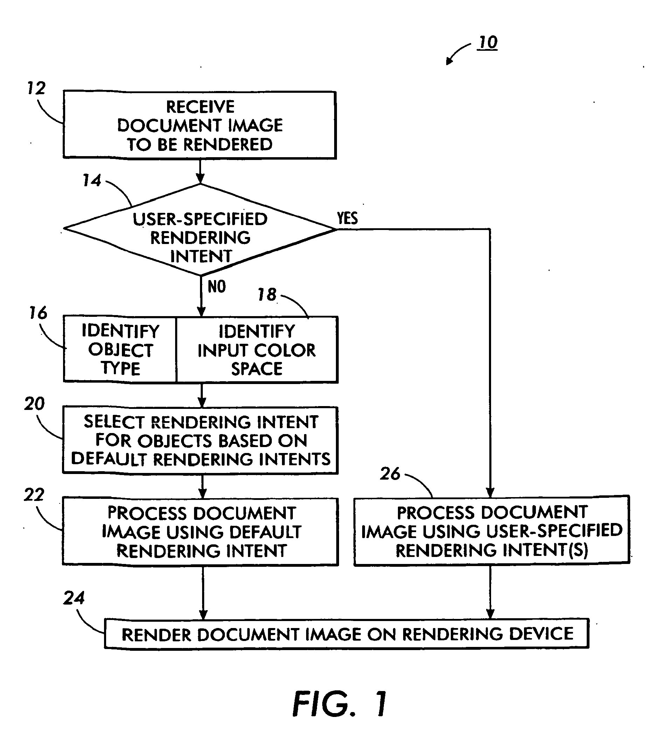

FIG. 1 shows a method for selection of rendering intent based on input color space.

With reference to FIG. 1, a method 10 for selection of rendering intent based on input color space is provided. The method begins when a document image to be rendered is received 12. Next, a determination is made whether the user will specify the rendering intent 14. However, in a system where the user is not permitted to specify the rendering intent, step 14 may be excluded or bypassed. If the user will not specify the rendering intent, object types for objects in the document image are identified 16 and the input color space for the document image is identified 18. Next, a rendering intent is selected for each object in the document image based on system default rendering intents 20. The system default rendering intents are based on input color space and object type. For example, the following table identifies a possible set of system default rendering intents by object type.

| | **CMYK** | **RGB** | **CIELAB** |
|---|---|---|---|
| **Text** | Relative Colorimetric | Saturation | Saturation |
| **Graphics** | Relative Colorimetric | Saturation | Saturation |
| **Images** | Relative Colorimetric | Perceptual | Perceptual |
| **Sweeps** | Relative Colorimetric | Saturation | Saturation |

Alternative arrangements for default rendering intents are possible, particularly in systems where additional object types and additional input color spaces are available.

After system-specified rendering intents are selected, the document image is processed using the default rendering intents 22. Then, the processed document image is rendered on a rendering device 24.

In step 14, if the user specifies the rendering intent, the user selects the rendering intent(s) and the document is processed using the user-specified rendering intent(s) 26. Then, the processed document is rendered on a rendering device 24.

Implementation of the input color space rendering intent selection is an extension of Xerox's current DocuSP architecture. In this type of architecture, the rendering engine acts as the Color Management Module, and currently selects the rendering intent based on object type. Rendering intent values may be system (default) or user-specified. As a color document is decomposed and rendered, the rendering engine is aware of the input color space of each object in the PDL, and uses this information to further extend the selected rendering intent(s).

## Claims

1. A method for processing a document to be rendered, comprising the step of:
a) identifying an object type for each object in the document (16);
**characterized by**
further comprising the steps of:
b) identifying an input color space associated with an object for each object in the document (18);
c) selecting a rendering intent for each object in the document from a set of rendering intents (20) based on the object type and the input color space associated with the corresponding object; and
d) processing the document by processing each object using the corresponding selected rendering intent for each object (22);
wherein the input color space associated with an object may differ from the input color space associated with another object in the same document and, when the input color spaces for corresponding object types differ the rendering intent selected for the same object types may differ.

2. The method as set forth in claim 1, further comprising the following steps:
e) before step a), determining if a user-specified rendering intent is selected (14);
f) proceeding to step a), if a user-specified rendering intent is not selected, otherwise processing the document using the user-specified rendering intent (26).

3. The method as set forth in claim 1, step c) further comprising the following step:
e) for each object where the input color space is CMYK, selecting a relative colorimetric rendering intent for the corresponding object.

4. The method as set forth in claim 1, step c) further comprising the following step:
e) for each object where the input color space is RGB and the object type is text, graphics, or sweeps, selecting a saturation rendering intent for the corresponding object.

5. The method as set forth in claim 1, step c) further comprising the following step:
e) for each object where the input color space is RGB or CIELAB and the object type is image, selecting a perceptual rendering intent for the corresponding object and, for each object where the input color space is CMYK and the object type is image, selecting a relative colorimetric rendering intent for the corresponding object.

6. The method as set forth in claim 1, step c) further comprising the following step:
e) for each object where the color space is CIELAB and the object type is text, graphics, or sweeps, selecting a saturation rendering intent for the corresponding object.

7. The method as set forth in claim 1, step c) further comprising the following step:
e) for each object where the input color space is RGB or CIELAB and the object type is graphic or sweep, selecting a saturation rendering intent for the corresponding object and, for each object where the input color space is CMYK and the object type is graphic or sweep, selecting a relative colorimetric rendering intent for the corresponding object.

8. The method according to claim .1, step c) further comprising the following:
e) for each object where the input color space is RGB or CIELAB, selecting a first rendering intent for the corresponding object and, for each object where the input color space is CMYK, selecting a second rendering intent for the corresponding object.

9. The method as set forth in claim 1, step c) further comprising the following step:
e) for each object where the input color space is RGB, selecting a first rendering intent for the corresponding object and, for each object where the input color space is CIELAB, selecting a second rendering intent for the corresponding object.

## Patentansprüche

1. Verfahren zum Verarbeiten eines wiederzugebenden Dokumentes, umfassend den nachfolgenden Schritt:
(a) Identifizieren eines Objekttyps für jedes Objekt in dem Dokument (16);
**dadurch gekennzeichnet, dass** das Verfahren des Weiteren die nachfolgenden Schritte umfasst:
(b) Identifizieren eines Eingabefarbraumes, der zu einem Objekt gehört, für jedes Objekt in dem Dokument (18);
(c) Auswählen eines Wiedergabezieles für jedes Objekt in dem Dokument aus einer Menge von Wiedergabezielen (20) auf Grundlage des Objekttyps und des Eingabefarbraumes, der zu dem entsprechenden Objekt gehört; und
(d) Verarbeiten des Dokumentes durch Verarbeiten jedes Objektes unter Verwendung des entsprechenden ausgewählten Wiedergabezieles für jedes Objekt (22);
wobei der Eingabefarbraum, der zu einem Objekt gehört, von dem Eingabefarbraum, der zu einem anderen Objekt gehört in demselben Dokument verschieden sein kann und wobei dann, wenn die Eingabefarbräume für entsprechende Objekttypen verschieden sind, das für dieselben Objekttypen ausgewählte Wiedergabeziel verschieden sein kann.

2. Verfahren nach Anspruch 1, des Weiteren umfassend die nachfolgenden Schritte:
(e) vor Schritt (a) Bestimmen, ob ein anwenderspezifisches Wiedergabeziel ausgewählt ist (14);
(f) Weitergehen zu Schritt (a), wenn kein anwenderspezifisches Wiedergabeziel ausgewählt ist, ansonsten Verarbeiten des Dokumentes unter Verwendung des anwenderspezifischen Wiedergabezieles (26).

3. Verfahren nach Anspruch 1, wobei Schritt (c) des Weiteren den nachfolgenden Schritt beinhaltet:
(e) für jedes Objekt, bei dem der Eingabefarbraum CMYK ist, erfolgendes Auswählen eines relativen farbmetrischen Wiedergabezieles für das entsprechende Objekt.

4. Verfahren nach Anspruch 1, wobei Schritt (c) des Weiteren den nachfolgenden Schritt umfasst:
(e) für jedes Objekt, bei dem der Eingabefarbraum RGB und der Objekttyp Text, Grafik oder Sweep ist, Auswählen eines sättigungsbasierten Wiedergabezieles für das entsprechende Objekt.

5. Verfahren nach Anspruch 1, wobei Schritt (c) des Weiteren den nachfolgenden Schritt umfasst:
(e) für jedes Objekt, bei dem der Eingabefarbraum RGB oder CIELAB und der Objekttyp Bild ist, Auswählen eines wahrnehmungsbasierten Wiedergabezieles für das entsprechende Objekt und für jedes Objekt, bei dem der Eingabefarbraum CMYK und der Objekttyp Bild ist, Auswählen eines relativen farbmetrischen Wiedergabezieles für das entsprechende Objekt.

6. Verfahren nach Anspruch 1, wobei Schritt (c) des Weiteren den nachfolgenden Schritt umfasst:
(e) für jedes Objekt, bei dem der Farbraum CIELAB und der Objekttyp Text, Grafik oder Sweep ist, Auswählen eines sättigungsbasierten Wiedergabezieles für das entsprechende Objekt.

7. Verfahren nach Anspruch 1, wobei Schritt (c) des Weiteren den nachfolgenden Schritt umfasst:
(e) für jedes Objekt, bei dem der Eingabefarbraum RGB oder CIELAB und der Objekttyp Grafik oder Sweep ist, Auswählen eines sättigungsbasierten Wiedergabezieles für das entsprechende Objekt und für jedes Objekt, bei dem der Eingabefarbraum CMYK und der Objekttyp Grafik oder Sweep ist, Auswählen eines relativen farbmetrischen Wiedergabezieles für das entsprechende Objekt.

8. Verfahren nach Anspruch 1, wobei Schritt (c) des Weiteren den nachfolgenden Schritt umfasst:
(e) für jedes Objekt, bei dem der Eingabefarbraum RGB oder CIELAB ist, Auswählen eines ersten Wiedergabezieles für das entsprechende Objekt und für jedes Objekt, bei dem der Eingabefarbraum CMYK ist, Auswählen eines zweiten Wiedergabezieles für das entsprechende Objekt.

9. Verfahren nach Anspruch 1, wobei Schritt (c) des Weiteren den nachfolgenden Schritt umfasst:
(e) für jedes Objekt, bei dem der Eingabefarbraum RGB ist, Auswählen eines ersten Wiedergabezieles für das entsprechende Objekt und für jedes Objekt, bei dem der Eingabefarbraum CIELAB ist, Auswählen eines zweiten Wiedergabezieles für das entsprechende Objekt.

## Revendications

1. Procédé pour le traitement d'un document à rendre, comprenant l'étape qui consiste à :
a) identifier un type d'objet pour chaque objet dans le document (16);
**caractérisé par** le fait de comprendre en plus les étapes qui consistent à :
b) identifier un espace de couleur d'entrée associé à un objet pour chaque objet dans le document (18) ;
c) sélectionner une intention de rendu pour chaque objet dans le document à partir d'un ensemble d'intensions de rendu (20) sur la base du type d'objet et de l'espace de couleur d'entrée associé à l'objet correspondant; et
d) traiter le document en traitant chaque objet en utilisant l'intension de rendu sélectionnée correspondante pour chaque objet (22);
où l'espace de couleur d'entrée associé à un objet peut différer de l'espace de couleur d'entrée associé à un autre objet dans le même document et, lorsque les espaces de couleur d'entrée pour des types d'objet correspondants diffèrent, l'intension de rendu sélectionnée pour les mêmes types d'objets peut être différente.

2. Procédé selon la revendication 1, comprenant en plus les étapes suivantes qui consistent à :
e) avant l'étape a), déterminer si une intension de rendu spécifiée par l'utilisateur est sélectionnée (14);
f) passer à l'étape a) si une intension de rendu spécifiée par l'utilisateur n'est pas sélectionnée, traiter sinon le document en utilisant l'intension de rendu (26) spécifiée par l'utilisateur.

3. Procédé selon la revendication 1, l'étape c) comprenant en plus l'étape suivante qui consiste à:
e) pour chaque objet où l'espace de couleur d'entrée est CMYK, sélectionner une intension de rendu colorimétrique relative pour l'objet correspondant.

4. Procédé selon la revendication 1, l'étape c) comprenant en plus l'étape suivante qui consiste à:
e) pour chaque objet où l'espace de couleur d'entrée est RGB et le type d'objet est texte, graphique, ou balayage, sélectionner une intension de rendu de saturation pour l'objet correspondant.

5. Procédé selon la revendication 1, l'étape c) comprenant en plus l'étape suivante qui consiste à :
e) pour chaque objet où l'espace de couleur d'entrée est RGB ou CIELAB et le type d'objet est image, sélectionner une intension de rendu perceptuelle pour l'objet correspondant, et, pour chaque objet où l'espace de couleur d'entrée est CMYK et le type d'objet est image, sélectionner une intension de rendu colorimétrique relative pour l'objet correspondant.

6. Procédé selon la revendication 1, l'étape c) comprenant en plus l'étape suivante qui consiste à:
e) pour chaque objet où l'espace de couleur d'entrée est CIELAB et le type d'objet est texte, graphique, ou balayage, sélectionner une intension de rendu de saturation pour l'objet correspondant.

7. Procédé selon la revendication 1, l'étape c) comprenant en plus l'étape suivante qui consiste à:
e) pour chaque objet où l'espace de couleur d'entrée est RGB ou CIELAB et le type d'objet est graphique ou balayage, sélectionner une intension de rendu de saturation pour l'objet correspondant et, pour chaque objet où l'espace de couleur d'entrée est CMYK et le type d'objet est graphique ou balayage, sélectionner une intension de rendu colorimétrique relative pour l'objet correspondant.

8. Procédé selon la revendication 1, l'étape c) comprenant en plus l'étape suivante qui consiste à:
e) pour chaque objet où l'espace de couleur d'entrée est RGB ou CIELAB, sélectionner une première intension de rendu pour l'objet correspondant et, pour chaque objet où l'espace de couleur d'entrée est CMYK, sélectionner une deuxième intension de rendu pour l'objet correspondant.

9. Procédé selon la revendication 1, l'étape c) comprenant en plus l'étape suivante qui consiste à:
e) pour chaque objet où l'espace de couleur d'entrée est RGB, sélectionner une première intension de rendu pour l'objet correspondant et, pour chaque objet où l'espace de couleur d'entrée est CIELAB, sélectionner une deuxième intension de rendu pour l'objet correspondant.
